# FASCICULE DE BREVET EUROPEEN

(11) **EP 1 674 333 B1**
(45) Date de publication et mention de la délivrance du brevet: **01.08.2007**
(21) Numéro de dépôt: 05301049.2
(22) Date de dépôt: 13.12.2005
(51) Int. Cl.: B60N 2/42

(54) **Siège de véhicule automobile comprenant un dispositif de sécurité à sac glonflable et dispositif de sécurité à sac gonflable**
Lehne eines Fahrzeugsitzes mit einem Airbag und ein Airbag
Backrest of a motor vehicle seat comprising an airbag and an airbag

(30) Priorité: 24.12.2004 FR 0413888
(43) Date de publication de la demande: 28.06.2006
(73) Titulaire: RENAULT s.a.s., 92100 Boulogne Billancourt (FR)
(72) Inventeur: Germain, Stéphane, 78720, Cernay La Ville (FR); Puyravaud, Christophe, 92100, Boulogne Billancourt (FR)

(56) Documents cités:
- DE-A1- 10 307 480
- FR-A- 2 830 821
- US-A- 6 155 593
- US-A1- 2003 132 621
- US-B1- 6 217 062

## Description

La présente invention concerne un siège de véhicule automobile comprenant une assise, un dossier et un dispositif de sécurité à sac gonflable monté sur le dossier, appelé couramment airbag. L'invention concerne également un dispositif de sécurité à sac gonflable.

Les dispositifs de sécurité à sac gonflable montés sur les dossiers de siège sont généralement disposés latéralement par rapport au dossier. De tels dispositifs de sécurité comprennent généralement un carter fixé sur un montant latéral du siège, le carter étant recouvert par la matelassure du dossier. A l'intérieur du carter sont montés un sac gonflable initialement plié et apte à se déployer, et un générateur de déploiement apte à assurer le gonflement dudit sac. Le carter comprend, en outre, un orifice de sortie du sac gonflable permettant le déploiement du sac vers l'extérieur lors d'un accident.

Un tel carter est généralement volumineux et son intégration à l'intérieur du dossier est relativement difficile en raison en particulier du manque de place entre le flanc latéral du dossier à partir duquel le sac gonflable se déploie et le montant de support sur lequel le carter est fixé.

On connaît, par la demande de brevet FR-A-2 830 821, un siège de véhicule automobile comprenant une assise, un dossier et un dispositif de sécurité à sac gonflable intégré dans le dossier comprenant un sac gonflable et un générateur de gaz pour le déploiement du sac. Le sac gonflable est monté sur un montant latéral de l'armature de dossier sur son côté extérieur, le générateur de déploiement étant monté sur ledit montant latéral sur son côté intérieur.

Un tel siège présente l'inconvénient de comprendre un carter comprenant le sac gonflable présentant un encombrement extérieur relativement volumineux. Lors du déploiement du sac gonflable par une ouverture latérale prévue à cet effet, l'occupant du siège se retrouve ainsi relativement éloigné du sac gonflable réduisant sensiblement l'efficacité du dispositif de sécurité. En outre, les dispositifs cités sont difficiles à mettre en oeuvre à l'intérieur de sièges dits « minces » qui comportent, de plus, une coque arrière de structure rigide.

La présente invention a pour objet de résoudre cette difficulté en proposant un siège de véhicule automobile comprenant un dispositif de sécurité particulièrement efficace pour protéger l'occupant d'un tel siège.

L'invention a également pour objet de prévoir un siège permettant d'accroître l'habitabilité du véhicule automobile.

A cet effet, le siège de véhicule automobile comprend une assise, un dossier et un dispositif de sécurité à sac gonflable monté sur le dossier qui est équipé d'une coque formant structure de dossier, à surface sensiblement courbe. Le dispositif comprend un carter à l'intérieur duquel sont disposés un sac gonflable, un générateur de déploiement et des moyens de connexion électrique, le carter comprenant une surface intérieure se trouvant dans la continuité de la surface de la coque.

Un siège comprenant un dossier équipé d'une telle coque permet de réduire sensiblement, par rapport à un dossier conventionnel, l'encombrement du dossier dans les zones latérales du siège. En d'autres termes, la coque du dossier présente un galbe permettant un gain de place pour une personne se trouvant assise à l'arrière d'un tel siège. Il résulte ainsi une augmentation de l'espace disponible à l'arrière du siège permettant notamment d'accroître le confort pour un passager arrière. Le siège présente l'avantage de comprendre une coque indéformable permettant un gain de place tout en garantissant la sécurité de l'occupant du siège.

Un tel carter présente l'avantage de pouvoir monter le générateur de déploiement, s'étendant par exemple suivant la hauteur du dossier, vers l'intérieur du siège. En effet, le carter comprend une surface intérieure courbe concave présentant une courbure locale sensiblement constante, sensiblement en concordance de forme avec la portion du siège sur laquelle ledit carter est monté. La forme du carter permet de réduire sensiblement l'encombrement latéral du dispositif de sécurité et positionner ainsi une ouverture de sortie du sac gonflable à proximité de l'occupant du siège.

Avantageusement, le générateur de déploiement pouvant être monté dans une zone latérale en position décalée vers l'arrière par rapport à un bord latéral du dossier.

Un tel siège présente l'avantage de réduire sensiblement la distance séparant l'occupant du siège de la zone de sortie du sac gonflable lors de son déploiement par la position décalée vers l'arrière du générateur de déploiement.

Le siège présente également l'avantage de permettre un meilleur déploiement du sac. En effet, le générateur de déploiement est décalé vers l'arrière par rapport à la zone de sortie du sac gonflable favorisant ainsi un déploiement du sac dans une direction sensiblement longitudinale par rapport au véhicule. Un tel siège permet d'accroître la sécurité de l'occupant en protégeant non seulement sa tête et son thorax mais également une partie de ses jambes.

De préférence, au moins une portion du générateur de déploiement est montée en position décalée vers l'arrière par rapport à une portion d'appui du dossier.

Dans un mode de réalisation préféré, le siège comprend deux montants latéraux sur lesquels est montée la coque, le générateur de déploiement étant monté en position décalée vers l'arrière par rapport aux montants latéraux.

Au moins une portion du générateur de déploiement peut être montée entre les montants latéraux du siège. En d'autres termes, au moins une portion du générateur de déploiement peut être montée en position décalée vers l'intérieur du siège par rapport au montant latéral situé du même côté du siège que le générateur de déploiement.

De préférence, le siège comprend des moyens enveloppants recouvrant au moins partiellement le dossier et comprenant une ouverture latérale apte à permettre le passage du sac gonflable lors de son déploiement, ladite ouverture latérale étant sensiblement à proximité du bord latéral du dossier.

De préférence, la coque comprend un orifice apte à permettre le passage des moyens de connexion électrique à l'intérieur de la matelassure. Les moyens de connexions électriques, tels que des câbles sont reliés à des connecteurs disposés à l'intérieur de la matelassure.

Le générateur de déploiement peut avantageusement présenter une forme générale allongée s'étendant suivant la hauteur du siège.

L'invention concerne également un dispositif de sécurité à sac gonflable comprenant un carter à l'intérieur duquel sont disposés un sac gonflable, un générateur de déploiement du sac gonflable et des moyens de connexion électrique aptes à permettre l'actionnement du générateur de déploiement. Le carter présente une surface intérieure en se trouvant dans la continuité de la surface extérieure d'une coque d'un siège de véhicule automobile contre laquelle le carter est destiné à venir en appui.

La présente invention et ses avantages seront mieux compris à l'étude de la description détaillée d'un mode de réalisation pris à titre d'exemple nullement limitatif et illustré par les dessins annexés, sur lesquels :
- la figure 1 représente schématiquement un siège de véhicule automobile comprenant des moyens de sécurité à sac gonflable suivant un aspect de l'invention, et
- la figure 2 est une vue selon l'axe II-II de la figure 1.

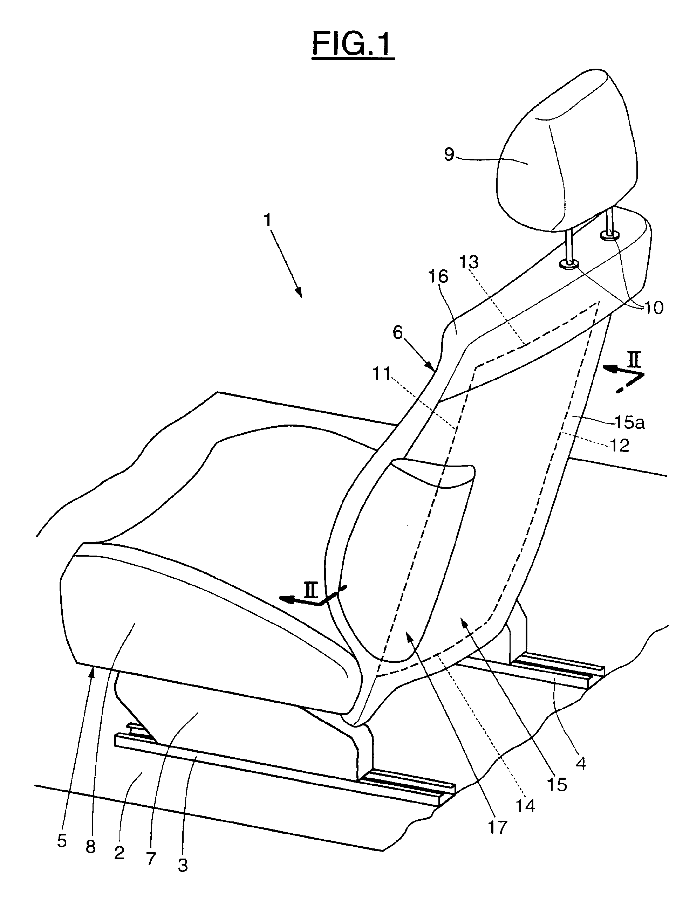

Comme on peut le voir sur la figure 1, un siège 1 de véhicule est monté sur un plancher 2 par l'intermédiaire de glissières 3, 4. Un tel siège 1 peut indifféremment être un siège avant ou un siège arrière.

Le siège 1 comprend une assise 5 et un dossier 6. L'assise 5 comprend une armature d'assise 7 s'étendant sensiblement horizontalement et coopérant avec les glissières 3, 4. Les glissières 3, 4 permettent un déplacement longitudinal du siège 1 par rapport au plancher 2. L'armature d'assise 7 est recouverte d'une matelassure 8, par exemple de la mousse en polyuréthane.

Le dossier 6 est ici fixé sur l'assise 5 de façon rigide. Bien entendu, il est également possible de prévoir un dossier 8 monté à rotation sur le siège 5. Un appui-tête 9 réglable est monté à l'extrémité supérieure du dossier 6 par l'intermédiaire de tiges 10 de support.

Le dossier 6 comprend une armature équipée de deux montants de support latéraux 11 et 12 (représentés en pointillé) reliés respectivement horizontalement à leurs extrémités supérieure et inférieure par une traverse haute 13 et par une traverse basse 14 (représentées en pointillé). La traverse haute 13 est située à l'extrémité supérieure du dossier 6, la traverse basse 14 étant situant sensiblement à l'extrémité inférieure du dossier 6 dans une zone lombaire d'un occupant (non représenté) du siège 1. Les montants de support latéraux 11, 12 et les traverses 13, 14 forme ainsi un cadre rigide, par exemple en tôle d'acier, et peuvent avantageusement comprendre des éléments creux.

Une coque 15 est fixée rigidement, par exemple par soudure, à l'arrière des montants de support latéraux 11, 12 et des traverses 13, 14. La coque 15 indéformable, par exemple en tôle d'acier, constitue l'élément de rigidification principal du dossier 6 et forme avec les montants de support 11, 12 et les traverses 13, 14 la structure du dossier 6. La coque 15 comprend un galbe sensiblement constant et présente une surface 15a extérieure courbe qui est située du côté arrière du dossier 6. Les montants de support latéraux 11, 12, les traverses 13, 14 et la coque 15 sont recouverts du côté avant du dossier 6 par une matelassure 16, par exemple en mousse polyuréthane. La matelassure 16 présente une surface d'appui 16a pour le dos d'un occupant du siège 1.

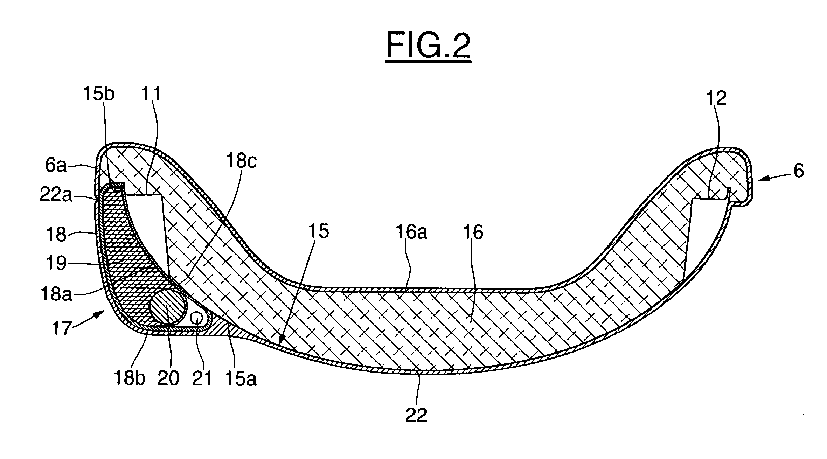

Le dossier 6 comprend un dispositif de sécurité à sac gonflable 17 disposé latéralement au niveau de la surface 15a de la coque 15. Le dispositif à sac gonflable 17 est monté suivant un bord latéral 15b (figure 2) de la coque 15, du côté opposé au montant de support latéral 11.

Comme illustré plus visiblement sur la figure 2, le dispositif de sécurité à sac gonflable 17 comprend un carter 18 à l'intérieur duquel sont disposés un sac gonflable 19, un générateur de déploiement 20 du sac gonflable et des moyens de connexion électrique 21 aptes à permettre l'actionnement dudit générateur de déploiement 20.

Le carter 18, par exemple en matière plastique, s'étend sensiblement suivant la hauteur du dossier 6. Le carter 18 comprend une plaque de support 18a sur laquelle est fixé un boîtier 18b. La plaque de support 18a présente une surface 18c se trouvant dans la continuité de la surface 15a de la coque 15. La plaque de support 18a est solidarisée à la coque 15 par l'intermédiaire d'organes de fixation (non représentés), tels que des vis. Le boîtier 18b est apte à envelopper le sac gonflable 19, le générateur de déploiement 20 et les moyens de connexion électrique.

Le sac gonflable 19, initialement replié à l'intérieur du carter 18, est représenté schématiquement sur la figure par des hachures. A l'intérieur du sac gonflable 19, est disposé le générateur de déploiement 20. Le générateur de déploiement 20, par exemple un générateur pyrotechnique, peut présenter une forme générale cylindrique s'étendant sensiblement suivant la hauteur du carter 18. Le générateur de déploiement 20 est monté de façon décalée latéralement vers l'intérieur du dossier 6 par rapport à un bord latéral 6a mais également par rapport à une extrémité 15b de la coque 15 de façon qu'au moins une portion dudit générateur de déploiement soit située entre les montants de supports latéraux 11, 12. L'axe longitudinal du générateur de déploiement 20 est décalé vers l'arrière par rapport à la surface d'appui 16a de la matelassure 16.

Les moyens de connexion électrique 21, tels que des câbles, permettant de relier le générateur de déploiement 20 avec un moyen de détection d'accident (non représenté), par exemple un capteur, adapté pour déclencher l'activation dudit générateur de déploiement 20 lors de la détection d'un accident. Le moyen de détection d'accident est relié aux câbles 21 par l'intermédiaire de connecteurs (non représentés) situés à l'intérieur de la matelassure 16, la coque 15 comprenant un orifice (non représenté) apte à permettre le passage desdits câbles 21. Les câbles 21 ainsi que les connecteurs se trouvent ainsi protégés respectivement par le carter 18 et par la matelassure 16 contre des éléments extérieurs pouvant endommager le fonctionnement des moyens de sécurité à sac gonflable 17.

Le dossier 6 est enveloppé dans une coiffe 22, en matière synthétique souple telle qu'un tissu ou bien en matière plastique flexible, comprenant une fente 22a s'étendant sur une hauteur sensiblement égale à la hauteur du carter 18 et étant située à l'arrière du bord latéral 6a. La fente 22a permet le déploiement du sac gonflable 19 vers l'extérieur lors d'un accident.

Le siège, selon l'invention, permet ainsi de protéger d'une manière particulièrement efficace un occupant lors d'un accident, la fente permettant le déploiement du sac gonflable étant située à proximité de l'occupant. Un tel siège présente également l'avantage de permettre un déploiement amélioré du sac gonflable. En effet, la position décalée vers l'intérieur du siège et vers l'arrière du générateur de déploiement par rapport à la fente aménagée dans la coiffe permet l'extension du sac gonflable vers l'avant suivant une direction comprenant une composante longitudinale, qui est parallèle par rapport à un axe longitudinal du véhicule, et une composante latérale.

## Revendications

1. Siège de véhicule automobile comprenant une assise (5), un dossier (6) et un dispositif de sécurité à sac gonflable (17) monté sur le dossier qui est équipé d'une coque (15) formant structure de dossier, à surface sensiblement courbe, **caractérisé par le fait que** le dispositif de sécurité (17) comprend un carter (18) à l'intérieur duquel sont disposés un sac gonflable (19), un générateur de déploiement (20) et des moyens de connexion électrique (21), le carter comprenant une surface intérieure (18c) se trouvant dans la continuité de la surface de la coque (15).

2. Siège selon la revendication 1, **caractérisé par le fait que** le générateur de déploiement (20) est monté dans une zone latérale en position décalée vers l'arrière par rapport à un bord latéral (6a) du dossier.

3. Siège selon la revendication 1 ou 2, **caractérisé par le fait qu**'au moins une portion du générateur de déploiement (20) est montée en position décalée vers l'arrière par rapport à une portion d'appui (16a) du dossier.

4. Siège selon l'une quelconque des revendications précédentes, **caractérisé par le fait qu**'il comprend deux montants latéraux (11, 12) sur lesquels est montée la coque (15), le générateur de déploiement (20) étant monté en position décalée vers l'arrière par rapport aux montants latéraux.

5. Siège selon la revendication 4, **caractérisé par le fait qu**'au moins une portion du générateur de déploiement (20) est montée entre les montants latéraux du siège (11, 12).

6. Siège selon l'une quelconque des revendications précédentes, **caractérisé par le fait qu**'il comprend des moyens enveloppants (22) recouvrant au moins partiellement le dossier et comprenant une ouverture latérale (22a) apte à permettre le passage du sac gonflable (19) lors de son déploiement, ladite ouverture latérale (22a) étant sensiblement à proximité du bord latéral (6a) du dossier.

7. Siège selon l'une quelconque des revendications précédentes, **caractérisé par le fait que** la coque (15) comprend un orifice apte à permettre le passage des moyens de connexion électrique à l'intérieur de la matelassure (16).

8. Siège selon l'une quelconque des revendications précédentes, **caractérisé par le fait que** le générateur de déploiement présente une forme générale allongée s'étendant suivant la hauteur du siège.

9. Dispositif de sécurité à sac gonflable comprenant un carter à l'intérieur duquel sont disposés un sac gonflable, un générateur de déploiement du sac gonflable et des moyens de connexion électrique aptes à permettre l'actionnement du générateur de déploiement, **caractérisé par le fait que** le carter présente une surface intérieure se trouvant dans la continuité de la surface extérieure d'une coque d'un siège de véhicule automobile contre laquelle le carter est destiné à venir en appui.

## Claims

1. Motor vehicle seat comprising a seat cushion (5), a backrest (6) and an airbag device (17) mounted on the backrest which is equipped with a shell (15) forming the backrest structure, with a substantially curved surface, **characterized in that** the airbag device (17) comprises a casing (18) inside which there are an airbag (19), a deployment generator (20) and electrical connection means (21), the casing comprising an interior surface (18c) which lies in the continuation of the surface of the shell (15).

2. Seat according to Claim 1, **characterized in that** the deployment generator (20) is mounted in a lateral region in a position that is offset rearwards with respect to a lateral edge (6a) of the backrest.

3. Seat according to Claim 1 or 2, **characterized in that** at least one portion of the deployment generator (20) is mounted in a position that is offset rearwards with respect to a portion (16a) of the backrest against which a person would rest.

4. Seat according to any one of the preceding claims, **characterized in that** it comprises two lateral uprights (11, 12) on which the shell (15) is mounted, the deployment generator (20) being mounted in a position that is offset rearwards with respect to the lateral uprights.

5. Seat according to Claim 4, **characterized in that** at least one portion of the deployment generator (20) is mounted between the lateral uprights of the seat (11, 12).

6. Seat according to any one of the preceding claims, **characterized in that** it comprises encasing means (22) at least partially covering the backrest and comprising a lateral opening (22a) that allows the airbag (19) through as it deploys, the said lateral opening (22a) being substantially in the vicinity of the lateral edge (6a) of the backrest.

7. Seat according to any one of the preceding claims, **characterized in that** the shell (15) comprises an orifice that allows the electrical connection means to be fed into the padding (16).

8. Seat according to any one of the preceding claims, **characterized in that** the deployment generator has an elongate overall shape extending over the height of the seat.

9. Airbag device comprising a casing inside which there are an airbag, a deployment generator for deploying the airbag and electrical connection means for actuating the deployment generator, **characterized in that** the casing has an interior surface which lies in the continuation of the exterior surface of a shell of a motor vehicle seat against which surface the casing is intended to rest.

## Patentansprüche

1. Kraftfahrzeugsitz, umfassend eine Sitzfläche (5), eine Rückenlehne (6) und eine Sicherheitsvorrichtung mit Airbag (17), der auf der Rückenlehne montiert ist, die mit einer Schale (15) versehen ist, die eine Rückenlehnenstruktur mit im Wesentlichen gekrümmter Fläche bildet, **dadurch gekennzeichnet, dass** die Sicherheitsvorrichtung (17) ein Gehäuse (18) umfasst, in dem ein Airbag (19), eine Entfaltungsvorrichtung (20) und elektrische Anschlussmittel (21) angeordnet sind, wobei das Gehäuse eine Innenfläche (18c) umfasst, die sich in der Verlängerung der Oberfläche der Schale (15) befindet.

2. Sitz nach Anspruch 1, **dadurch gekennzeichnet, dass** die Entfaltungsvorrichtung (20) in einer seitlichen Zone in nach hinten zu einem Seitenrand (6a) der Rückenlehne versetzter Position befestigt ist.

3. Sitz nach Anspruch 1 oder 2, **dadurch gekennzeichnet, dass** mindestens ein Abschnitt der Entfaltungsvorrichtung (20) in nach hinten zu einem Stützabschnitt (16a) der Rückenlehne versetzter Position befestigt ist.

4. Sitz nach einem der vorhergehenden Ansprüche, **dadurch gekennzeichnet, dass** er zwei seitliche Ständer (11, 12) umfasst, auf denen die Schale (15) befestigt ist, wobei die Entfaltungsvorrichtung (20) in nach hinten zu den seitlichen Ständern versetzter Position montiert ist.

5. Sitz nach Anspruch 4, **dadurch gekennzeichnet, dass** mindestens ein Abschnitt der Entfaltungsvorrichtung (20) zwischen den seitlichen Ständern des Sitzes (11, 12) montiert ist.

6. Sitz nach einem der vorhergehenden Ansprüche, **dadurch gekennzeichnet, dass** er Umhüllungsmittel (22) umfasst, die zumindest teilweise die Rückenlehne bedecken und eine seitliche Öffnung (22a) umfassen, die den Durchgang des Airbags (19) bei seiner Entfaltung ermöglichen können, wobei die seitliche Öffnung (22a) im Wesentlichen in der Nähe des seitlichen Randes (6a) der Rückenlehne vorgesehen ist.

7. Sitz nach einem der vorhergehenden Ansprüche, **dadurch gekennzeichnet, dass** die Schale (15) eine Öffnung umfasst, die den Durchgang der elektrischen Anschlussmittel in das Innere der Polsterung (16) ermöglichen kann.

8. Sitz nach einem der vorhergehenden Ansprüche, **dadurch gekennzeichnet, dass** die Entfaltungsvorrichtung eine allgemeine längliche Form aufweist, die sich entlang der Höhe des Sitzes erstreckt.

9. Sicherheitsvorrichtung mit Airbag, umfassend ein Gehäuse, in dem ein Airbag, eine Entfaltungsvorrichtung für den Airbag und elektrische Anschlussmittel vorgesehen sind, die die Betätigung der Entfaltungsvorrichtung ermöglichen können, **dadurch gekennzeichnet, dass** das Gehäuse eine Innenfläche aufweist, die sich in der Verlängerung der Außenfläche einer Schale eines Kraftfahrzeugsitzes befindet, an der das Gehäuse zur Anlage gelangen soll.
